# EUROPÄISCHE PATENTANMELDUNG

(11) **EP 2 110 566 A2**
(43) Veröffentlichungstag der Anmeldung: **21.10.2009**
(21) Anmeldenummer: 09005335.6
(22) Anmeldetag: 14.04.2009
(51) Int. Cl.: F16B 19/10, B60R 13/02

(54) **Verbindungsgruppe zur Befestigung eines Anbauelements auf einem Trägerelement**

(30) Priorität: 17.04.2008 DE 202008005318 U
(71) Anmelder: TRW Automotive Electronics & Components GmbH, 78315 Radolfzell (DE)
(72) Erfinder: Vogler, Laurent, 67330 Obermodern (FR); Kuhm, Michel, 67340 Ingwiller (FR)
(74) Vertreter: Prinz & Partner

(57) **Zusammenfassung**

Eine Verbindungsbaugruppe (1) zur Befestigung eines Anbauelements (2) auf einem Trägerelement (3) umfaßt einen Fuß (4), der in eine Öffnung (39) des Trägerelements (3) einführbar ist und Festlegungsmittel (40) zur Festlegung des Fußes (4) bezüglich des Trägerelements (3) in einer zur Längsachse (41) des Fußes (4) parallelen Richtung aufweist. Die Verbindungsbaugruppe umfaßt ferner einen Pin (5), der in einen Durchgang (20) des Anbauelements (2) einführbar ist und Haltemittel (50) aufweist, die einer Verschiebung des Anbauelements (2) in einer zur Längsachse (51) des Pins (5) parallelen Richtung entgegenwirken. Der Pin (5) ist in den Fuß (4) einführbar und weist Verriegelungsmittel (52) auf, die mit komplementären Verriegelungsmitteln (42) des Fußes (4) in einer bezüglich der Längsachsen (41, 51) radialen Richtung zusammenwirken. Der Fuß (4) weist zweite elastische axiale Rückstellmittel (43) bezüglich seiner Längsachse (41) auf, die eine Auflagefläche (54) des Pins (5) und eine Gegenauflagefläche (44) des Fußes (4) miteinander in Kontakt halten, wenn nach Einführung des Pins (5) in den Fuß (4) die Verriegelungsmittel (52) des Pins (5) mit den komplementären Verriegelungsmitteln (42) des Fußes (4) zusammenwirken.

## Beschreibung

Die Erfindung betrifft eine Verbindungsbaugruppe zur Befestigung eines Anbauelements auf einem Trägerelement, mit einem Fuß, der in eine Öffnung des Trägerelements einführbar ist und Festlegungsmittel zur Festlegung des Fußes bezüglich des Trägerelements in einer zur Längsachse des Fußes parallelen Richtung aufweist, und einem Pin, der in einen Durchgang des Anbauelements einführbar ist und Haltemittel aufweist, die einer Verschiebung des Anbauelements in einer zur Längsachse des Pins parallelen Richtung entgegenwirken, wobei der Pin in den Fuß einführbar ist und Verriegelungsmittel aufweist, die mit komplementären Verriegelungsmitteln des Fußes in einer bezüglich der Längsachsen radialen Richtung zusammenwirken.

Solche Verbindungsbaugruppen werden insbesondere in der Automobilindustrie zur Befestigung von Innenverkleidungsteilen an Karosserieteilen eines Kraftfahrzeugs eingesetzt.

Es sind verschiedene Arten von Vorrichtungen zum Befestigen von Anbauelementen auf Trägerelementen bekannt, die als Verbindungsbaugruppen mit zwei Verbindungsbauteilen analog zu Nieten ausgebildet sind. Ein erstes Bauteil (Fuß) wird in eine im Trägerelement ausgebildete Öffnung eingeführt. Ein zweites Bauteil (Pin) weist einen Schaft auf, an dessen einem Ende ein Kopf gebildet ist. Mit dem entgegengesetzten Ende wird der Schaft durch eine Öffnung des Trägerelements (Bohrung oder Schlitzloch) hindurch und anschließend koaxial in das erste Bauteil eingeschoben. Das Anbauelement ist dann zwischen dem Kopf des zweiten Bauteils und dem Trägerelement eingespannt.

Das Zusammenwirken zwischen dem ersten und dem zweiten Bauteil kann in unterschiedlicher Weise erfolgen:
- durch Einclipsen mit Hilfe einer Verdickung oder dergleichen an einem Bauteil und einer mit dieser zusammenwirkenden Ausnehmung am anderen Bauteil, indem beim axialen Einführen des einen Bauteils die Verdickung und/oder die Ausnehmung elastisch verformt und nach einem Überhub in ihre Ausgangslage(n) zurückgestellt wird/werden;
- durch Einclipsen wenigstens eines der beiden Bauteile mit Hilfe einer oder mehrerer am Bauteil angeformter elastischer Laschen;
- durch Verriegeln/Entriegeln: nach dem koaxialen Einführen des zweiten Bauteils in einer bestimmten Winkelausrichtung relativ zum ersten Bauteil wird mittels eines Werkzeugs eine Drehverriegelung hergestellt, bei der die Verriegelungsmittel der beiden Bauteile miteinander zusammenwirken. Eine Entriegelung kann durch Drehung im entgegengesetzten Sinn erfolgen. Solche Vorrichtungen sind unter der Bezeichnung Vierteldrehungs-Befestigungen bekannt; oder
- durch plastisches Verformen wenigstens eines der beiden Bauteile.

Bei manchen Verbindungsbaugruppen ist ein Teil des ersten Bauteils auf der Rückseite des Trägerelements expandierbar. Dieses Expandieren kann entweder mittels eines Werkzeugs oder einer Verformung infolge des Zusammenwirkens des ersten und des zweiten Bauteils erfolgen.

Manche Verbindungsbaugruppen aus dem Stand der Technik sind so ausgelegt, daß sie nur in einer Trägeröffnung mit einer ganz bestimmten Form befestigt werden können, was ihre allgemeine Verwendbarkeit einschränkt.

Häufig muß ein Anbauelement nach seinem ersten Einbau wieder ausgebaut werden, insbesondere um bestimmte Einrichtungen anzubringen oder Wartungsarbeiten durchzuführen. Bei den bekannten Verbindungsbaugruppen ist es dann notwendig, zunächst das zweite und anschließend das erste Bauteil zu entfernen, sofern dies noch möglich ist. Die Bauteile müssen also getrennt werden. In manchen Fällen ist es zudem notwendig, hierfür ein Werkzeug zu verwenden. Nicht selten wird beim Ausbau eines der Bauteile beschädigt. Bestimmte Verbindungstechniken erlauben zudem keine Wiederverwendung der Verbindungsbaugruppe unter zufriedenstellenden Umständen, insbesondere wenn das Zusammenwirken zwischen dem ersten und dem zweiten Bauteil durch plastische Verformung stattfindet.

Außerdem ist festzustellen, daß die aus dem Stand der Technik bekannten Verbindungstechniken oft nur eine mittelmäßige Dichtigkeit an den Verbindungsstellen gewährleisten.

Aus der EP 1 698 785 A1 ist eine Verbindungsbaugruppe der eingangs genannten Art mit einem Pin und einem Fuß bekannt. Der Pin weist einen Schaft auf, der in eine Öffnung des Fußes einführbar ist. Der Fuß weist zwei elastische Laschen mit Arretiermitteln auf, die sich senkrecht von einer Platte erstrecken. Die Verbindungsbaugruppe kann eine Wartestellung, in welcher der Pin im Fuß gehalten und die Platte des Fußes zwischen einer Anschlagfläche und einem Vorsprung des Pins verspannt ist, eine Verriegelungsstellung und eine Entriegelungsstellung einnehmen.

Die DE 37 04 696 A1 zeigt eine Befestigungsvorrichtung für Platten mit einem Steckteil und einem Aufnahmeteil, in dem eine Ausnehmung für den langgestreckten Körper des Steckteils vorgesehen ist. In der Ausnehmung ist ein umlaufender Halteabschnitt gebildet, der an einem Haltekopf des Steckteils angreift und dadurch das Steckteil gegen ein axiales Herausziehen sichert.

In der US 4 276 806 ist eine wiederverwendbare Befestigungsbaugruppe aus zwei Kunststoffteilen gezeigt, welche zunächst an einer Sollbruchstelle unverlierbar miteinander verbunden sind. Wenn das obere Teil in das untere Teil eingesteckt wird, sorgt es für eine Arretierung des unteren Teils in einer Öffnung des zu befestigenden Elements, und Rückhaltemittel des unteren Teils hintergreifen den Rand einer Öffnung des Trägers, so daß das Element fest am Träger befestigt ist. Durch Anheben des Kopfes des oberen Teils kann dieses außer Eingriff mit dem unteren Teil gebracht werden. Das Element mit der Baugruppe kann dann vom Träger getrennt werden.

Aus der EP 1 177 387 B1 ist ein aus einem Oberteil und einem dieses durchsetzenden Unterteil bestehendes Verbindungselement bekannt, mit dem eine Verbindung zwischen einem Träger und einem Lagerteil hergestellt werden kann. In der Montagestellung ist ein Bereich des mit dem Lagerteil verbundenen Oberteils hinter oder in einer Trägeröffnung gespreizt. Das Oberteil weist einen oberen Flansch mit einer zentrischen Innenverzahnung auf, in die eine Gegenverzahnung des Unterteils eingreift. Das Unterteil weist in einem Rastbereich zwischen zwei zylindrischen Sektoren eine Rastausnehmung auf, in die eine Gegenrast des Oberteils eingelagert ist. Ein mit Schlitzen versehener Schaft, dessen flexible Sektoren mit einer Außenverzahnung versehen ist, schließt an den oberen Flansch des Oberteils an.

Die DE 603 01 994 T2 betrifft ein Kunststoff-Befestigungselement zur Befestigung einer Platte an einem Träger. Das Befestigungselement umfaßt einen Stiftteil mit einem Kopf und einem Schaft sowie einen Körperteil mit einem Flansch und einem sich von diesem erstreckenden Paar von Beinen. Die Beine sind dazu vorgesehen, in eine im Träger ausgebildete Bohrung eingesetzt zu werden. Der Flansch weist einen Kanal auf, der den Schaft des Stiftteils aufnimmt. Dabei werden die Beine voneinander weg in Druckkontakt mit einer Innenfläche der Trägerbohrung gedrängt, um so das Befestigungselement und anschließend die Platte am Träger zu befestigen. Ein außen an einem Bein des Körperteils gebildeter Eingriffsteuermechanismus steuert den Druckkontakt zwischen dem Bein und der Innenfläche der Trägerbohrung. Dadurch wird die Kraft zum Einführen des Stiftteils in den Körperteil bestimmt. Der Eingriffsteuermechanismus umfaßt eine im Bein gebildete Bohrung, wodurch die Druckkraft reduziert wird, die erforderlich ist, um den Schaft durch die Bohrung im Körperteil zu treiben.

Aufgabe der Erfindung ist es, die Nachteile des Stands der Technik zu vermeiden und eine Verbindungsbaugruppe vorzuschlagen, die eine sichere und spielfreie, aber reversible Befestigung des Anbauelements auf dem Trägerelement gewährleistet.

Gelöst wird diese Aufgabe durch eine Verbindungsbaugruppe mit den Merkmalen des Anspruchs 1. Vorteilhafte Ausgestaltungen der erfindungsgemäßen Verbindungsbaugruppe ergeben sich aus den Unteransprüchen.

Die erfindungsgemäße Verbindungsbaugruppe ist **dadurch gekennzeichnet, daß** der Fuß zweite elastische axiale Rückstellmittel bezüglich seiner Längsachse aufweist, die eine Auflagefläche des Pins und eine Gegenauflagefläche des Fußes miteinander in Kontakt halten, wenn nach Einführung des Pins in den Fuß die Verriegelungsmittel des Pins mit den komplementären Verriegelungsmitteln des Fußes zusammenwirken. Die erfindungsgemäße Verbindungsbaugruppe hat den Vorteil, daß der Pin und der Fuß aus einem starren Material hergestellt werden können, so daß sie aufgrund ihrer Robustheit mit Hilfe von automatisierten Produktionsmittel angebracht werden können.

Weitere Merkmale und Vorteile der Erfindung ergeben sich aus der folgenden Beschreibung nicht einschränkend zu verstehender Ausführungsformen hervor und aus den beigefügten Zeichnungen, auf die Bezug genommen wird. In den Zeichnungen zeigen:
- Figur 1 eine schematische Teilschnittansicht einer erfindungsgemäßen Verbindungsbaugruppe in einer Ebene durch deren Längsachse im montierten Zustand;
- Figur 2 eine schematische Seitenansicht des Fußes der Verbindungsbaugruppe;
- Figur 3 eine schematische Ansicht des Fußes aus Figur 2 in der Richtung A;
- Figur 4 eine schematische Teilschnittansicht des Fußes aus Figur 2 in der Ebene C-C durch dessen Längsachse;
- Figur 5 eine schematische Schnittansicht des Fußes aus Figur 2 in der zur Längsachse senkrechten Ebene D-D in der Richtung A;
- Figur 6 eine schematische Schnittansicht des Fußes aus Figur 2 in der zur Längsachse senkrechten Ebene E-E in der Richtung B;
- Figur 7 eine schematische Ansicht des Fußes aus Figur 2 in der Richtung B;
- Figur 8 eine schematische Seitenansicht des Pins der Verbindungsbaugruppe;
- Figur 9 eine schematische Ansicht des Pins aus Figur 8 in der Richtung A; und
- Figur 10 eine schematische Teilschnittansicht einer Verbindungsbaugruppe gemäß einer Variante der Erfindung in einer Ebene durch deren Längsachse.

Obwohl die Erfindung bevorzugt auf dem Gebiet der Verkleidung von Strukturen und insbesondere auf dem Gebiet der Kraftfahrzeuge und des Verkleidens der Karosserie mit einer Innenverkleidung anwendbar ist, wird die Erfindung nachfolgend allgemein anhand einer reversiblen Befestigung eines Anbauelements auf einem Trägerelement beschrieben, wobei das Anbauelement ein Innenverkleidungsteil und das Trägerelement ein Karosserieteil eines Kraftfahrzeugs sein kann.

Die in den Figuren dargestellte erfindungsgemäße Verbindungsbaugruppe 1 dient zur Befestigung eines Anbauelements 2 auf einer Vorderseite 31 eines Trägerelements 3 und wirkt mit dem Rand einer im Trägerelement 3 gebildeten Öffnung 30 zusammen.

Die Verbindungsbaugruppe 1 umfaßt als wesentliche Elemente einen Fuß 4 und einen Pin 5. Bei den in den Figuren gezeigten Ausführungsformen sind dies die beiden einzigen Bestandteile der Verbindungsbaugruppe 1. Der Fuß 4 und der Pin 5 sind aus Kunststoff und insbesondere durch Spritzgießen hergestellt. Der Fuß 4 und der Pin 5 sind somit für eine Massenproduktion geeignet. Anders als bei bekannten Verbindungsbaugruppen sind der Fuß 4 und der Pin 5 aber aus einem harten und starren Kunststoff hergestellt, was das Zusammenwirken ihrer Kontaktzonen im elastischen und nicht im plastischen Verformungsbereich ermöglicht. Außerdem erleichtert die Ausbildung aus einem harten und starren Material die Handhabung durch automatisierte Mittel wie etwa Roboter.

Der Fuß 4, der einen Hohlraum 49 um seine Längsachse 41 aufweist, ist dafür vorgesehen, in die Öffnung 30 des Trägerelements 3 eingeführt zu werden. Der Fuß 4 verfügt über Mittel 40 zum Festlegen des Fußes 4 am Trägerelement 3 bezüglich einer zur Längsachse 41 des Fußes 4 parallelen Richtung. Diese axiale Festlegung erfolgt unter der Wirkung einer in dieser Richtung ausgeübten Kraft F1. Die Festlegungsmittel 40 können die Öffnung 30 in dichter Weise verschließen.

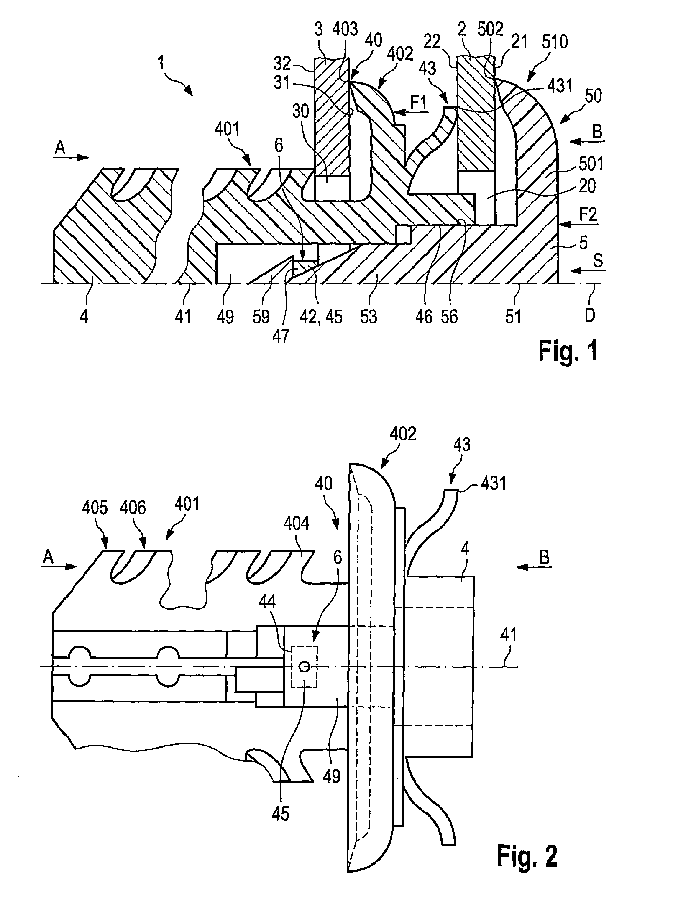

Wie in Figur 1 zu sehen ist weisen die Festlegungsmittel 40 einerseits Arretiermittel 401 und andererseits erste elastische axiale Rückstellmittel 402 auf, die sich nach Einführen des Fußes 4 auf entgegengesetzten Seiten des Trägerelements 3 befinden. Die ersten axialen Rückstellmittel 402, die als Schale ausgebildet sind, stützen sich mit einer Kontaktfläche 403 auf der Vorderseite 31 des Trägerelements 3 ab.

Die Arretiermittel 401 sind dagegen als Widerhaken 404 ausgebildet, die mit der Rückseite 32 des Trägerelements 3 und/oder mit der Innenfläche der Öffnung 30 zusammenwirken können, so daß die Verbindungsbaugruppe 1 auch in einem Sackloch verwendet werden kann. Der Fuß 4 weist mehrere axiale Reihen 405, 406 von Widerhaken 404 gemäß verschiedenen zur Längsachse 41 parallelen Mantellinien auf (siehe Figur 2). Die Reihen sind axial voneinander beabstandet. Der Fuß 4 kann somit in Öffnungen 30 verwendet werden, die in Blechen unterschiedlicher Dicke gestanzt sind, wobei der Abstand zwischen den Widerhaken zweier alternierenden Reihen innerhalb derselben Reihe kleiner ist, wodurch für jede Blechdicke eine gute Andruckauflage gewährleistet ist.

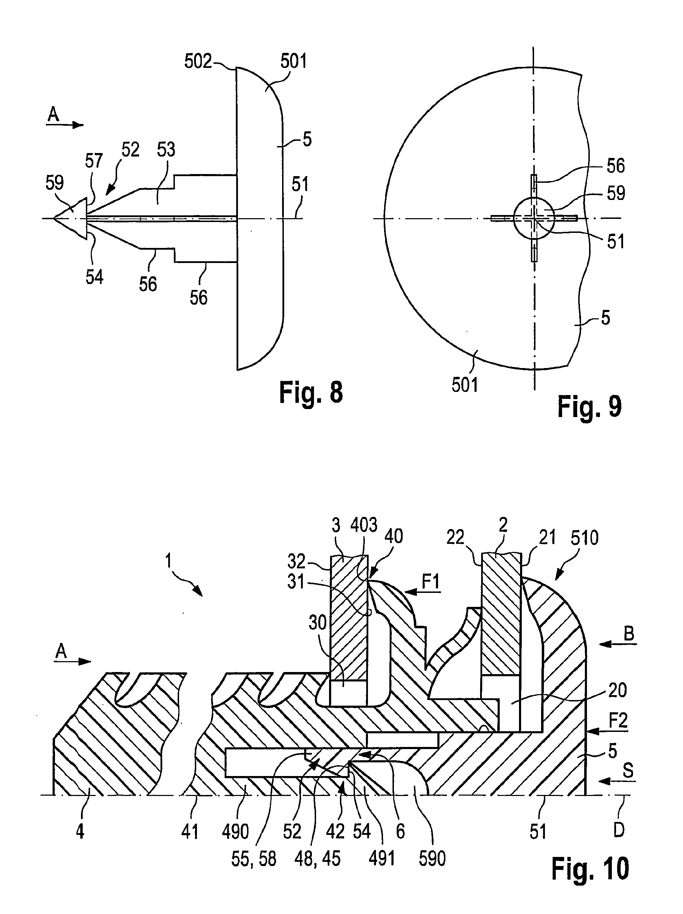

Der in Figur 8 einzeln gezeigte Pin 5 ist zum Einführen in einen Durchgang 20 des Anbauelements 2 vorgesehen und weist Haltemittel 50 auf, die einer Verschiebung des Anbauelements 2 in einer zur Längsachse 51 des Pins 5 parallelen Richtung entgegenwirken (siehe Figur 1). Der Pin 5 ist außerdem zum Einführen in den Hohlraum 49 des Fußes 4 in zueinander fluchtender koaxialer Ausrichtung der Längsachsen 41 und 51 (gemeinsame Achse D) vorgesehen. Der Pin 5 gleitet dabei in einer Einführungsrichtung S.

Die aus dem Fuß 4 und dem Pin 5 gebildete Verbindungsbaugruppe 1 wird zunächst am Anbauelement 2 vormontiert. Anschließend wird die Verbindungsbaugruppe 1 auf dem Trägerelement 3 unter der Wirkung einer auf den Pin 5 in der Richtung S ausgeübten Kraft F2 befestigt. Daß der Pin 5 dabei durch die Krafteinwirkung innerhalb des Fußes 4 gleitet, ist aufgrund der Festlegungsmittel 40 verständlich, die für eine feste (und dichte) Anbringung des Fußes 4 an der Öffnung 30 des Trägerelements 3 sorgen.

Der Pin 5 weist zudem Verriegelungsmittel 52 auf, die dazu vorgesehen sind, unter der Wirkung von radialen elastischen Rückstellmitteln 6 in einer zur Achse D radialen Richtung mit komplementären Verriegelungsmitteln 42 zusammenzuwirken, die im Fuß 4 ausgebildet sind. Das Zusammenwirken dieser Verriegelungsmittel 52 mit den komplementären Verriegelungsmitteln 42 ist nur in einem begrenzten axialen Bereich nach der Einführung des Pins 5 in den Fuß 4 möglich.

Um ein einwandfreies Anliegen des Anbauelements 2 auf seinem Träger zu gewährleisten ist zu berücksichtigen, daß das Anbauelement 2 Fertigungstoleranzen hat, d. h. seine Dicke kann in einem bestimmten Bereich variieren. Das Zusammenwirken der Verriegelungsmittel 52 mit den komplementären Verriegelungsmitteln 42 berücksichtigt diese Toleranzen und erlaubt ein gewisses funktionales Spiel bezüglich der Achse D.

Um dieses Spiel zu beseitigen und das Anliegen des Anbauelements 2 an der aus dem Trägerelement 3 und dem darin eingeführten Fuß 4 gebildeten Baugruppe zu gewährleisten, weist der Fuß 4 weiterhin zweite elastische axiale Rückstellmittel 43 bezüglich seiner Längsachse 41 auf. Diese zweiten elastischen axialen Rückstellmittel 43 sind dazu vorgesehen, eine Auflagefläche 54 des Pins 5, die zwischen den Einführungsmitteln 59 und den Haltemitteln 50 gebildet ist (siehe Figur 8), und eine Gegenauflagefläche 44 des Fußes 4 (siehe Figuren 2, 4, 5, und 7), in Kontakt miteinander zu halten, wenn die komplementären Verriegelungsmittel 42 des Fußes 4 mit den Verriegelungsmittel 52 des Pins 5 im montierten Zustand der Verbindungsbaugruppe 1 zusammenwirken. Die Auflageflächen 54 und 44 sind im wesentlichen senkrecht zur Längsachse 51 des Pins 5 bzw. zur Längsachse 41 des Fußes 4 ausgebildet.

Gemäß einer ersten Ausführungsform, die in den Figuren 1 bis 9 gezeigt ist, sind die elastischen radialen Rückstellmittel 6 in den Fuß 4 integriert. Sie sind aus einer oder mehreren elastischen Zungen 45 gebildet, die symmetrisch oder regelmäßig um die Achse 41 verteilt sind, so daß die Rückstellkräfte auf diese Achse konzentriert werden. Die Auflagefläche 44 ist am Ende der Zunge(n) 45 ausgebildet.

Die Verriegelungsmittel 52 sind umlaufend um die Längsachse 51 angeordnet. Diese Anordnung gewährleistet die Möglichkeit des Zusammenwirkens zwischen dem Pin 5 und dem Fuß 4 in jeder Winkelstellung bezüglich der Achse D, so daß im Gegensatz zu bekannten Verbindungsbaugruppen eine endgültige Verriegelung in jeder Winkelstellung möglich ist.

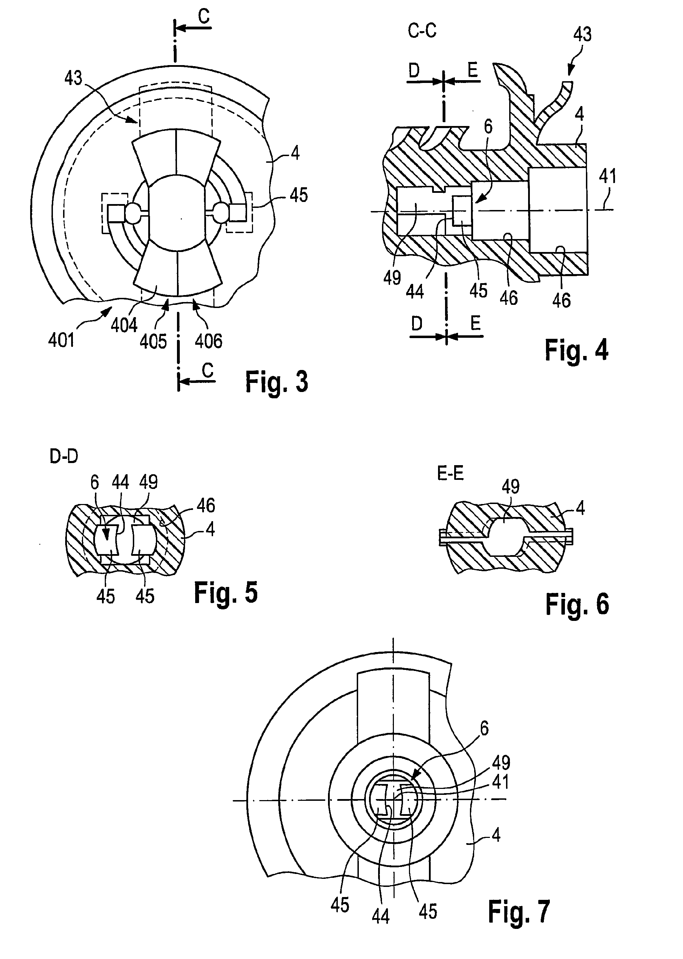

Die Haltemittel 50 des Pins 5 bestehen aus einem Kopf 501, der an einem ersten axialen Ende eines Schafts 53 liegt. Dieser Schaft 53 ist dazu vorgesehen, entlang der Achse D gleitend mit dem Fuß 4 zusammenzuwirken. Wie in den Figuren 4 und 8 gezeigt weist der Pin 5 um die Längsachse 51 umlaufende Führungsmittel 56 auf. Der Fuß 4 weist um die Längsachse 41 umlaufende komplementäre Führungsmittel 46 auf, deren Form wenigstens teilweise zu den Führungsmitteln 56 komplementär ist. Die Führungsmittel 56 und 46 sind dazu vorgesehen, das koaxiale Gleiten des Pins 5 relativ zum Fuß 4 entlang der Achse D zu erlauben. Der Schaft 53 gleitet innerhalb des Hohlraums 49 des Fußes 4, wo er auf Höhe der komplementären Führungsmitteln 46 geführt ist, die im Fuß 4 als eine oder mehrere Bohrungen ausgebildet sind.

Am zweiten axialen Ende des um die Längsachse 51 drehbaren Schafts 53, das den Haltemitteln 50 entgegengesetzt ist, weist der Pin 5 Einführungsmittel 59 auf. Die Einführungsmittel 59 sind dazu vorgesehen, den radialen Rückstellmitteln 6 entgegenzuwirken, um das Einführen der Einführungsmittel 59 in den Hohlraum 49 des Fußes 4 und den Durchgang der Verriegelungsmittel 52 zu erlauben. Die Einführungsmittel 49 sind spitzförmig, konisch, spitzbogig oder vergleichbar ausgebildet.

Wie in den Figuren 2, 4, 5 und 7 gezeigt bilden die elastischen Zungen 45 gleichzeitig die elastischen radialen Rückstellmittel 6 und die komplementären Verriegelungsmittel 42 des Fußes 4. Genauer gesagt weisen die komplementären Verriegelungsmittel 42 wenigstens einen Finger 47 auf, der in die elastische Zunge 45 integriert ist. Die elastischen Zungen 45 sind in einer zur Längsachse 41 radialen Richtung beweglich und weisen eine Umfangsfläche auf, die die Gegenauflagefläche 44 des Fußes 4 bildet.

Der Schaft 53 des Pins 5 weist hinter den Einführungsmitteln 59 einen Hinterschnitt 57 auf, der zusammen mit den Einführungsmitteln 59 die Verriegelungsmittel 52 bildet. Der Hinterschnitt 57 weist die Auflagefläche 54 auf, die dazu vorgesehen ist, mit der Gegenauflagefläche 44 durch Anschlag zusammenzuwirken. Der Hinterschnitt 57 ermöglicht auch eine Auslenkung der elastischen Zungen 45 um ihren Anschlußpunkt, damit sie zur Längsachse 41 des Fußes 4 zurückgestellt werden können.

Wenn unter der Einwirkung der axialen Kraft F2 nach dem Einschieben des Pins 5 in den Durchgang 20 des Anbauelements 2 der Pin 5 in den Fuß 4 eingeführt wird, werden die Zungen 45, die die radialen elastischen Rückstellmittel 6 bilden, durch das Vorschieben der Einführungsmittel 59 bis zu einer maximalen radialen Stellung von der Längsachse 41 entfernt. Beim weiteren Eindringen des Pins 5 gibt der Hinterschnitt 57 die Rückstellwirkung der radialen elastischen Rückstellmittel 6 frei, so daß die Zungen 45 zur Achse 41 des Fußes 4 zurückklappen und die Einführungsmittel 59 im Hohlraum 49 des Fußes eingeschlossen sind.

Ein Entfernen des Pins 5 aus dem Fuß 4 ist nicht möglich, wenn man nicht über ein Werkzeug zum Spreizen der Zungen 45 verfügt, um einen umgekehrten Durchgang der Einführungsmittel 59 zu erlauben. Sobald die Zungen 45 in den Hinterschnitt 57 geklappt sind und ihre Fläche 44 als Anschlag wirkt, der nach einer bestimmten geringfügigen Verschiebung entgegen der Richtung S einer weiteren Bewegung des Pins 5 entgegenwirkt, ist es nicht mehr möglich, durch einfaches axiales Ziehen entlang der Achse D entgegen der Richtung S auf die radialen elastischen Rückstellmittel 6 so einzuwirken, daß der Pin 5 freigegeben wird. Dies liegt daran, daß die Verschiebung in einer Stellung endet, in welcher die Fläche 44 der Zungen 45 mit der Auflagefläche 54 des Pins 5 zusammenwirkt. In diesem Zustand ist das Anbauelement 2 zwischen den Haltemitteln 50 des Pins 5, welche insbesondere durch den Kopf 501 gebildet sind, und dem Fuß 4 eingespannt gehalten.

Es verbleibt noch die tatsächliche Fixierung des Anbauelements 2 relativ zum Fuß 4 und folglich zum Trägerelement 3. Hierzu weist der Fuß 4 zweite elastische axiale Rückstellmittel 43 bezüglich der Achse D auf, die dazu vorgesehen sind, die Auflagefläche 54 des Pins 5 und die Gegenauflagefläche 44 des Fußes 4 in Kontakt miteinander zu halten. Die zweiten elastischen axialen Rückstellmittel 43 sorgen dafür, daß der Pin 5 entlang der Achse D entgegen der Richtung S zurückgeschoben wird, bis die Anschlagsstellung der Auflageflächen 44 und 54 der Zungen 45 bzw. des Pins 5 erreicht ist.

Die zweiten elastischen axialen Rückstellmittel 43 sind außerdem so bemessen, daß sie über das Erreichen dieser Anschlagsstellung hinaus eine Kraft auf das Anbauelement 2 ausüben und dieses zwischen einer Auflagefläche 431, die an den zweiten elastischen axialen Rückstellmitteln 43 gegenüber der dem Trägerelement 3 zugewandten Rückseite 22 des Anbauelements 2 ausgebildet ist, und einer Auflagefläche 502, die am Kopf 501 des Pins 5 auf der der Rückseite 22 entgegengesetzten Vorderseite 21 des Anbauelements 2 ausgebildet ist, fest eingespannt zu halten. Wie in den Figuren 1 bis 4 gezeigt sind die zweiten elastischen axialen Rückstellmittel 43 als Schale oder Segment einer Schale oder dergleichen ausgebildet.

Darüber hinaus weist der Pin 5 dritte elastische axiale Rückstellmittel 510 auf, die an dessen Kopf 501 gebildet sind und in einer zur Längsachse 51 parallelen Richtung wirken. Die dritten elastischen axialen Rückstellmittel 510 stehen an der Auflagefläche 502 in Kontakt mit einer gegenüberliegenden Auflagefläche 21 des Anbauelements 2 und sind dazu vorgesehen, auf das Anbauelement 2 eine Schubkraft in der Richtung S auszuüben.

Die Verbindungsbaugruppe gewährleistet insbesondere aufgrund der Gestaltung der Arretiermittel 401 sowie der ersten, zweiten und dritten elastischen axialen Rückstellmittel 402, 43 bzw. 510 eine einwandfreie Dichtigkeit an den Verbindungsstellen.

In Figur 10 ist eine zweite Ausführungsform der erfindungsgemäßen Verbindungsbaugruppe gezeigt, die der ersten Ausführungsform grundsätzlich ähnlich ist. Für diejenigen Komponenten, die denen der ersten Ausführungsform entsprechen und die gleiche Funktion haben, wurden trotz möglicher Abweichungen in der konkreten Ausgestaltung dieser Komponenten die gleichen Bezugszeichen verwendet. Im folgenden wird nur auf die wesentlichen Unterschiede eingegangen.

Anders als bei der ersten Ausführungsform sind bei der zweiten Ausführungsform die elastischen radialen Rückstellmittel 6 in den Pin 5 integriert und durch wenigstens eine elastische Zunge 55 gebildet. Die elastischen Zungen 55 sind in einer zur Längsachse 51 radialen Richtung beweglich und weisen eine Umfangsfläche auf, die die Auflagefläche 54 bildet.

Eine oder mehrere elastische Zungen 44 bilden die Verriegelungsmittel 52, genauer gesagt weisen die Verriegelungsmittel 52 wenigstens einen Finger 58 auf, der in die Zunge 44 integriert ist.

Die komplementären Verriegelungsmittel 42 sind um die Längsachse 41 umlaufend und durch wenigstens einen Hinterschnitt 48 gebildet.

Außerdem weist der Fuß 4 am Ende eines um die Längsachse 41 umlaufenden Schafts 490 auf der Stirnseite, die dazu vorgesehen ist, mit dem Pin 5 zusammenzuwirken, Einführungsmittel 491 auf, die den elastischen radialen Rückstellmitteln 6 entgegenwirken, um das Einführen der Einführungsmittel 491 in einen im Pin 5 ausgebildeten Hohlraum 590 zu erlauben. Auf der Seite, die derjenigen entgegengesetzt ist, die mit dem Pin 5 zusammenwirken soll, weist der Schaft 490 in der Nähe der Einführungsmittel 491 an einem Ende des Hinterschnitts 48, der Teil der komplementären Verriegelungsmittel 42 ist, die Gegenauflagefläche 45 auf.

Die erfindungsgemäße Verbindungsbaugruppe 1, insbesondere die beschriebenen Ausführungsformen, ermöglichen es, das Anbauelement 2 und das Trägerelement 3 fest und dicht miteinander zu verbinden, wobei die Befestigung grundsätzlich reversibel ist. Das Entfernen des Anbauelements 2 vom Trägerelement 3 ist aber nicht ohne weiteres möglich, so daß ein unerwünschtes Ablösen des Anbauelements vom Trägerelement vermieden wird. Nur mit Hilfe eines Werkzeugs kann der Pin 5 aus dem Fuß 4 herausgezogen werden, um das Abnehmen des Anbauelements 2 zu gestatten. Es ist somit nach dem ersten Anbringen des Anbauelements 2 auf dem Trägerelement 3 möglich, das Anbauelement 2 zu entfernen, um Einrichtungen anzubringen oder Wartungsarbeiten durchzuführen, und anschließend das Anbauelement 2 wieder einwandfrei auf dem Trägerelement 3 zu befestigen.

Selbstverständlich ist die Erfindung nicht auf die beschriebenen Ausführungs-und Anwendungsbeispiele beschränkt. Vielmehr sind Varianten und Änderungen möglich, ohne den Rahmen der Erfindung zu verlassen.

## Patentansprüche

1. Verbindungsbaugruppe (1) zur Befestigung eines Anbauelements (2) auf einem Trägerelement (3), mit
einem Fuß (4), der in eine Öffnung (39) des Trägerelements (3) einführbar ist und Festlegungsmittel (40) zur Festlegung des Fußes (4) bezüglich des Trägerelements (3) in einer zur Längsachse (41) des Fußes (4) parallelen Richtung aufweist, und
einem Pin (5), der in einen Durchgang (20) des Anbauelements (2) einführbar ist und Haltemittel (50) aufweist, die einer Verschiebung des Anbauelements (2) in einer zur Längsachse (51) des Pins (5) parallelen Richtung entgegenwirken,
wobei der Pin (5) in den Fuß (4) einführbar ist und Verriegelungsmittel (52) aufweist, die mit komplementären Verriegelungsmitteln (42) des Fußes (4) in einer bezüglich der Längsachsen (41, 51) radialen Richtung zusammenwirken,
**dadurch gekennzeichnet, daß**
der Fuß (4) zweite elastische axiale Rückstellmittel (43) bezüglich seiner Längsachse (41) aufweist, die eine Auflagefläche (54) des Pins (5) und eine Gegenauflagefläche (44) des Fußes (4) miteinander in Kontakt halten, wenn nach Einführung des Pins (5) in den Fuß (4) die Verriegelungsmittel (52) des Pins (5) mit den komplementären Verriegelungsmitteln (42) des Fußes (4) zusammenwirken.

2. Verbindungsbaugruppe (1) nach Anspruch 1, **dadurch gekennzeichnet, daß** die Verriegelungsmittel (52) um die Längsachse (51) des Pins (5) umlaufend ausgebildet sind.

3. Verbindungsbaugruppe (1) nach Anspruch 1 oder 2, **dadurch gekennzeichnet, daß** die komplementären Verriegelungsmittel (42) um die Längsachse (41) des Fußes (4) umlaufend ausgebildet sind.

4. Verbindungsbaugruppe (1) nach einem der vorhergehenden Ansprüche, **dadurch gekennzeichnet, daß** die Verriegelungsmittel (52) des Pins (5) mit den komplementären Verriegelungsmitteln (42) des Fußes (4) unter der Wirkung von radialen elastischen Rückstellmitteln (6), die vorzugsweise in den Fuß (4) integriert und durch wenigstens eine elastische Zunge (45) gebildet sind, in der radialen Richtung zusammenwirken.

5. Verbindungsbaugruppe (1) nach Anspruch 4, **dadurch gekennzeichnet, daß** die elastische Zunge (45) die komplementären Verriegelungsmittel (42) bildet und / oder in einer zur Längsachse (41) des Fußes (4) radialen Richtung beweglich ist und eine Umfangsfläche aufweist, die die Gegenauflagefläche (44) bildet.

6. Verbindungsbaugruppe nach einem der vorhergehenden Ansprüche, **dadurch gekennzeichnet, daß** die komplementären Verriegelungsmittel (42) wenigstens einen Finger (47) oder einen Hinterschnitt (48) aufweisen.

7. Verbindungsbaugruppe (1) nach Anspruch 4, **dadurch gekennzeichnet, daß** die radialen elastischen Rückstellmittel (6) in den Pin (5) integriert und durch wenigstens eine elastische Zunge (55) gebildet sind, wobei die elastische Zunge (55) vorzugsweise die Verriegelungsmittel (52) bildet und / oder vorzugsweise in einer zur Längsachse (51) radialen Richtung beweglich ist und eine Umfangsfläche aufweist, die die Auflagefläche (54) bildet.

8. Verbindungsbaugruppe (1) nach einem der vorhergehenden Ansprüche, **dadurch gekennzeichnet, daß** die Verriegelungsmittel (52) wenigstens einen Hinterschnitt (47) oder einen Finger (58) aufweisen.

9. Verbindungsbaugruppe (1) nach einem der Ansprüche 4 bis 8, **dadurch gekennzeichnet, daß** der Pin (5) an einem um seine Längsachse (51) umlaufenden Schaft (53) Einführungsmittel (59) aufweist, die den radialen Rückstellmitteln (6) entgegenwirken, um ein Einführen der Einführungsmittel (59) in einen im Fuß (4) ausgebildeten Hohlraum (49) zu erlauben, wobei vorzugsweise zwischen den Einführungsmitteln (59) und den Arretiermitteln (50) der Schaft (53) an einem Hinterschnitt (47) die Auflagefläche (54) aufweist und die Auflagefläche (54) zumindest einen Teil der Verriegelungsmittel (52) bildet.

10. Verbindungsbaugruppe (1) nach einem der Ansprüche 4 bis 8, **dadurch gekennzeichnet, daß** der Fuß (4) an einem um seine Längsachse (41) umlaufenden Schaft (490) Einführungsmittel (491) aufweist, die den radialen Rückstellmitteln (6) entgegenwirken, um ein Einführen der Einführungsmittel (491) in einen im Pin (5) ausgebildeten Hohlraum (590) zu erlauben, wobei vorzugsweise der Schaft (490) an einem Hinterschnitt (48) die Gegenauflagefläche (45) aufweist und die Gegenauflagefläche (45) zumindest einen Teil der komplementären Verriegelungsmittel (42) bildet.

11. Verbindungsbaugruppe (1) nach einem der vorhergehenden Ansprüche, **dadurch gekennzeichnet, daß** die Festlegungsmittel (40) des Fußes (4) aus Arretiermitteln (401) und ersten elastischen axialen Rückstellmitteln (402) gebildet sind, wobei die Arretiermittel (401) vorzugsweise Widerhaken (404) aufweisen, die einen elastischen Halt an der Öffnung (30) des Trägerelements (3) gewährleisten, und insbesondere in mehreren, in einer bezüglich der Längsachse (41) des Fußes (4) parallelen Richtung beabstandeten Reihen (405, 406) angeordnet sind.

12. Verbindungsbaugruppe (1) nach einem der vorhergehenden Ansprüche, **dadurch gekennzeichnet, daß** der Pin (5) dritte elastische axiale Rückstellmittel (510) bezüglich einer zu seiner Längsachse (51) parallelen Richtung aufweist.

13. Verbindungsbaugruppe (1) nach einem der vorhergehenden Ansprüche, **dadurch gekennzeichnet, daß** der Pin (5) um seine Längsachse (51) umlaufende Führungsmittel (56) und der Fuß (4) um seine Längsachse (41) umlaufende komplementäre Führungsmittel (46) aufweist, deren Form wenigstens teilweise zu den Führungsmitteln (56) des Pins (5) komplementär und so ausgebildet ist, daß sie ein koaxiales Gleiten des Pins (5) relativ zum Fuß (4) entlang einer Achse (D) erlauben.

14. Verbindungsbaugruppe (1) nach einem der vorhergehenden Ansprüche, **dadurch gekennzeichnet, daß** der Pin (5) durch Ausrichtung der Längsachsen (41, 51) des Fußes (4) und des Pins (5) gemäß einer Achse (D) und durch koaxiales Gleiten in einer Einführungsrichtung (S) entlang der Achse (D) in einen Hohlraum (49) im Fuß (4) eingeführt werden kann.

15. Verbindungsbaugruppe (1) nach einem der vorhergehenden Ansprüche, **dadurch gekennzeichnet, daß** die Festlegungsmittel (40) die Öffnung (30) dicht verschließen.
